# EUROPÄISCHE PATENTSCHRIFT

(11) **EP 2 098 388 B1**
(45) Veröffentlichungstag und Bekanntmachung des Hinweises auf die Patenterteilung: **14.08.2013**
(21) Anmeldenummer: 09153262.2
(22) Anmeldetag: 20.02.2009
(51) Int. Cl.: B60G 17/015, B60G 17/018, B60G 17/0185, B60G 17/06

(54) **Fahrwerk mit verstellbarer Dämpfkraft**
Suspension with adjustable damping force
Suspension doté d'une force d'amortissement réglable

(30) Priorität: 06.03.2008 DE 102008012906
(43) Veröffentlichungstag der Anmeldung: 09.09.2009
(73) Patentinhaber: ZF Friedrichshafen AG, 88038 Friedrichshafen (DE)
(72) Erfinder: Maurischat, Christian, 97502 Euerbach (DE); Pradel, Robert, 97520 Röthlein (DE)

(56) Entgegenhaltungen:
- DE-A1- 19 950 177
- JP-A- 2009 006 882

## Beschreibung

Die Erfindung betrifft ein Fahrwerk mit verstellbarer Dämpfkraft gemäß dem Oberbegriff von Patentanspruch 1.

Fahrwerke mit verstellbarer Dämpfkraft werden in Fahrzeugen der Oberklasse verbreitet eingesetzt, da die Mehrkosten im Vergleich zu einem konventionellen Schwingungsdämpfer vom Kunden akzeptiert werden. Auch in der Fahrzeugmittelklasse sind verstellbare Schwingungsdämpfer als Option im Angebot. Bei Kleinwagen, die häufig als Zweitfahrzeug benutzt werden, gibt es derzeit keine nennenswerte Verbreitung eines elektrisch verstellbaren Schwingungsdämpfers, da dort der Kostendruck deutlich größer ist. Dabei ist zu berücksichtigen, dass im Laufe des Fahrzeuglebens ein Austausch der verschlissenen Schwingungsdämpfer ansteht, und ein Schwingungsdämpfer mit verstellbarer Dämpfkraft nicht einfach durch eine konventionelle Ausführung ersetzt werden kann, da z. B. über das Steuergerät eine Fehlermeldung signalisiert würde.

Um trotzdem einen guten Fahrkomfort in Verbindung mit sicheren Fahreigenschaften zu erreichen, werden teilweise mechanisch verstellbare Schwingungsdämpfer, wie beispielsweise wegabhängig verstellbare oder amplituden-abhängige Schwingungsdämpfer, verwendet.

Die Aufgabe der vorliegenden Erfindung besteht darin, für ein Fahrwerk, das auch im Bezug auf Komfort und Fahrsicherheit erhöhten Ansprüchen genügen soll, eine kostengünstige Lösung bereitzustellen.

Erfindungsgemäß wird die Aufgabe dadurch gelöst, dass an mindestens einer Fahrzeugachse ein Schwingungsdämpfer mit verstellbarer Dämpfkraft und ein unverstellbarer Schwingungsdämpfer angeordnet sind.

Wenn an einem Fahrzeug statt vier nur drei verstellbare Schwingungsdämpfer und ein unverstellbarer Schwingungsdämpfer verwendet werden, dann sinkt der Systempreis um mindestens 20%. Die dabei theoretisch auftretende Verschlechterung der Fahrwerksfunktion wird von einem durchschnittlichen Fahrzeuginsassen nicht wahrgenommen.

Eine noch weitergehendere Lösung wird dann erreicht, wenn bei einem Zweiachsfahrwerk anstatt vier verstellbarer Schwingungsdämpfer nur zwei verstellbare und zwei unverstellbare Schwingungsdämpfer vorliegen. Diese sind bei dem Fahrwerk bezogen auf die Fahrzeuglängsachse diagonal gegenüberliegend jeweils als verstellbare und unverstellbare Schwingungsdämpfer ausgeführt, um alle Fahrzeugaufbaubewegungen wie Nicken, Rollen oder Heben abfangen zu können.

Für den teilweisen Verzicht auf verstellbare Schwingungsdämpfer kommt ein Betriebsverfahren zur Anwendung, für das eine Sensorik mindestens einen Fahrzustandsparameter erfasst und diesen einer Rechnereinheit zuführt, in der auf Basis des mindestens einen Fahrzeugzustandparameters bezogen auf mindestens einen Fahrzustand Dämpfkräfte ermittelt werden um einen angestrebten Fahrzustand zu erreichen, wobei in die Dämpfkraftermittlung die Dämpfkräfte des mindestens einen unverstellbaren Schwingungsdämpfers als Dämpfkraftanteile eingehen und die Einstellung der verstellbaren Schwingungsdämpfer unter Berücksichtigung der Dämpfkraftanteile des mindestens einen unverstellbaren Schwingungsdämpfers vorgenommen wird. Letztlich geht es um die Begrenzung einer Fahrzeugaufbaubewegung, die wiederum als eine Horizontierung zu betrachten ist. Wenn man eine Ebene, in diesem Fall einen Fahrzeugaufbau, zu einer zweiten Ebene, einer Fahrbahn, horizontieren will, dann benötigt man nicht unbedingt vier verstellbare Stützen, da eine Ebene durch drei Stützen oder Vektoren ausrichtbar ist. Diese Erkenntnis wird mit dem Verfahren konsequent umgesetzt.

Es ist vorgesehen, dass auf Basis des mindestens einen Fahrzeugstandsparameters die Dämpfkraft des mindestens einen unverstellbaren Schwingungsdämpfers anhand seiner Dämpfkraftkennlinie ermittelt wird. Wählt man beispielsweise als Fahrzustandsparameter die Relativgeschwindigkeit zwischen Rad und Fahrzeugaufbau, dann kann man daraus direkt über die Dämpfkraftkennlinie, die konstruktiv festgelegt und damit bekannt ist, auf die damit zusammenhängende Dämpfkraft schließen. Die Dämpfkraft ist nicht nur als Betrag bekannt sondern auch hinsichtlich der Richtung, so dass ein eindeutiger Dämpfkraftvektor für die Bestimmung der Dämpfkrafteinstellungen der verstellbaren Schwingungsdämpfer zur Verfügung steht.

In weiterer vorteilhafter Ausgestaltung des Verfahrens wird bei dem unverstellbaren Schwingungsdämpfers von einer Dämpfkraftkennlinie ausgegangen, die der Mindestdämpfkraftfunktion entspricht, wobei aus den Fahrzustandsparameter ein Abklingverhalten einer Fahrzeugschwingbewegung bestimmbar ist, und das aus einer Abweichung von einem Sollabklingverhalten der Verschleißzustand zumindest des unverstellbaren Schwingungsdämpfers bestimmt wird. Wenn der unverstellbare Schwingungsdämpfer verschlissen ist, dann haben die verstellbaren Schwingungsdämpfer mit hoher Wahrscheinlichkeit ihre maximale Betriebsdauer erreicht, da die Verschleißteile in beiden Schwingungsdämpferbauformen identisch sind.

Der Verschleißzustand wird über eine Anzeigevorrichtung dargestellt und informiert den Fahrer, so dass verschleißabhängig ein Austausch der Schwingungsdämpfer vorgenommen werden kann.

Anhand der folgenden Figurenbeschreibung soll die Erfindung näher erläutert werden.

Es zeigt:
- Fig. 1: Prinzipdarstellung eines zweiachsigen Fahrwerks mit drei verstellbaren Schwingungsdämpfern
- Fig. 2: Prinzipdarstellung eines zweiachsigen Fahrwerks mit zwei verstellbaren Schwingungsdämpfern
- Fig. 3: Prinzipdarstellung der wirksamen Dämpfkräfte am Fahrzeugaufbau
- Fig. 4: Blockschaltbild für den Betrieb der verstellbaren Schwingungsdämpfer
- Fig. 5: Blockschaltbild zur Bestimmung des Verschleißzustands

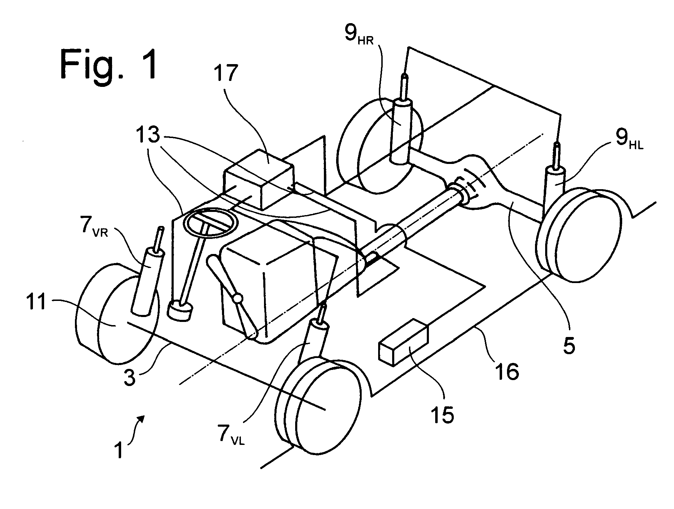

Die Figur 1 zeigt stark vereinfacht ein Fahrwerk für ein Kraftfahrzeug 1 mit einer Vorderachse 3 und einer Hinterachse 5, wobei sich die Erfindung nicht auf ein zweiachsiges Fahrzeug beschränkt. An jeder der beiden Fahrzeugachsen 3; 5 sind Schwingungsdämpfer 7_{VL}; 7_{HR}; 9_{HR}; 9_{HL} angeordnet, die eine Federungsbewegung jedes Rades 11 bedämpfen. An mindestens einer Achse sind ein verstellbarer 7_{VL}; 9_{HR}; 9_{HL} und ein unverstellbarer Schwingungsdämpfer 7_{VR} angeordnet, in diesem Fall an der Vorderachse 3.

Das Kraftfahrzeug umfasst eine Sensorik 13, die Fahrzeugstandsparameter erfasst, beispielsweise die Geschwindigkeit, einen Lenkwinkel oder auch die Bewegung eines Fahrzeugaufbaus 16, beispielsweise über einen Beschleunigungssensor 15. Alle Signale der Sensorik 13 werden einer Rechnereinheit 17 zugeführt, die daraus Stellsignale für die verstellbaren Schwingungsdämpfer 7_{VL}; 9_{HR}; 9_{HL} generiert.

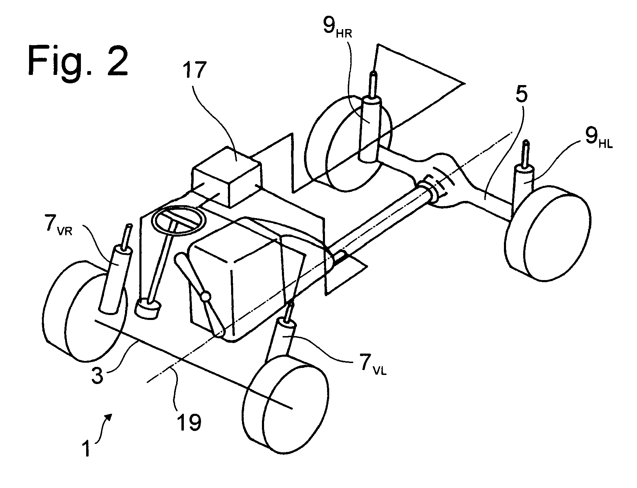

Die Figur 2 zeigt eine Variante, die im Vergleich zur Fig.1 noch weiter vereinfacht ist, indem an jeder Achse 3; 5 nur noch ein verstellbarer Schwingungsdämpfer 7_{VL}; 9_{HR} angeordnet ist, die jedoch bezogen auf eine Fahrzeuglängsachse 19 diagonal angeordnet sind.

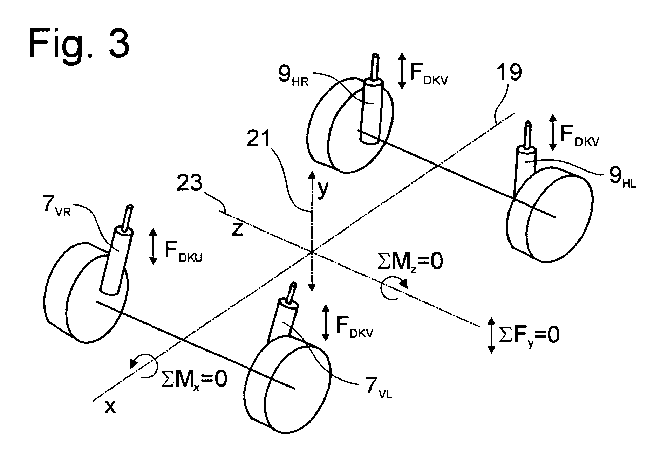

Die Fig. 3 beschränkt sich auf die Darstellung von Wirklinien von Dämpfkräften und die fahrzustandsabhängigen Bewegungen des Fahrzeugaufbaus. Vertikalbewegungen parallel zur Fahrzeughochachse 21 bzw. zur Y-Achse bewirken ein Heben und ein Senken des Fahrzeugaufbaus 16 parallel zu einer ebenen Fahrbahn. Zur Unterdrückung einer Schwingung sind gegenläufige Dämpfkräfte F_{Y} einzusetzen. Nickbewegungen, wie sie beispielsweise beim Beschleunigen oder beim Abbremsen auftreten stellen Drehmomente (Mz) um eine Fahrzeugquerachse 23 dar. Wankbewegungen, z. B. bei Kurvenfahrt sind als Drehmomente um die Fahrzeuglängsachse 19 zu betrachten.

Bei Kenntnis des Fahrzustands kann z. B. durch eine Vektorberechnung ermittelt werden, welche Dämpfkräfte an dem jeweiligen Schwingungsdämpfer sinnvoll und/oder notwendig sind, um eine Fahrzeugaufbaubewegung zu bedämpfen. In der Darstellung basierend auf der Fig. 1 können nur die Schwingungsdämpfer 7_{VL}; 9_{HL}; 9_{HR} auf den Fahrzustand eingestellt werden.

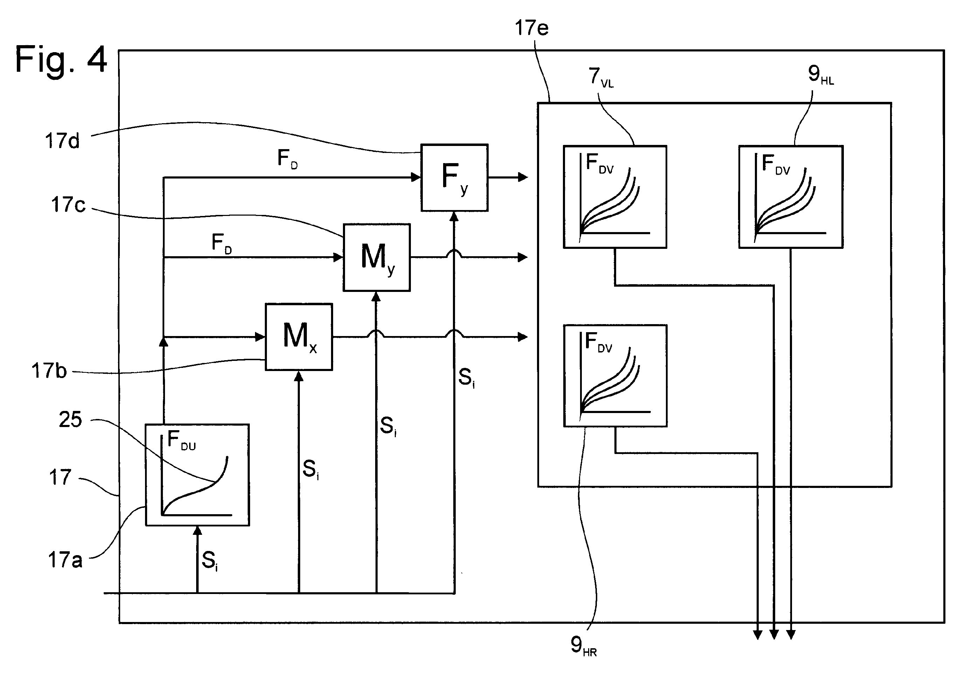

Die Fig. 4 beschreibt stark abstrahiert ein in der Rechnereinheit 17 ablaufendes Betriebsverfahren für die verstellbaren Schwingungsdämpfer 7_{VL}; 9_{HR}; 9_{HL}. Alle Signale Sᵢ der Sensorik 13 gehen in die Rechnereinheit 17 ein. Die Signale Sᵢ werden einem ersten Modul 17a zugeführt, das dazu dient, auf der Basis der Signale Sᵢ der Sensorik die Dämpfkraft des unverstellbaren Schwingungsdämpfers 7_{VR} zu bestimmen. In dem Modul ist eine unveränderbare Dämpfkraftkennlinie 25 des unverstellbaren Schwingungsdämpfers abgelegt. Die Kombination der Dämpfkraftkennlinie 25 mit mindestens einem Eingangssignal führt zu einer Dämpfkraft F_{DU}, die als Dämpfkraftanteil in die weitere Dämpfkraftermittlung der verstellbaren Schwingungsdämpfer eingeht. Im vorliegenden Beispiel werden in Modulen 17b - 17d Dämpfkräfte für jeweils einen Fahrzustand ermittelt, die auf oder eine entsprechenden Achse nach Fig. 3 bezogen sind. Alle in den Modulen 17b- 17d ermittelten fahrzustandsbezogenen Dämpfkräfte werden im Modul 17e zu einer Gesamtdämpfkraft für alle Fahrzustände zusammengefasst. In Modul 17e wird die Gesamtdämpfkraft für jeden der einzelnen verstellbaren Schwingungsdämpfer 7_{VL}; 9_{HL}; 9_{HR} in Dämpfkräfte umgerechnet, die jeweils von verstellbaren Schwingungsdämpfern 7_{VL}; 9_{HL}; 9_{HR} erzeugt werden können. Aus einer Anzahl von möglichen Dämpfkraftkennlinien wird für jeden verstellbaren Schwingungsdäpfer 7_{VL}; 9_{HL}; 9_{HR} die bestmögliche ausgewählt.

Bei einem Fahrzeug mit einer Vorderachse und einer Hinterachse und in Summe vier verstellbaren Schwingungsdämpfern geht man von vier unbekannten Dämpfkraftvektoren aus, die man mit dem Ziel einer Fahrwerkssteuerung/Fahrwerksregelung auf der Basis des mindestens einen Fahrzustandparameters bestimmen muss. Mit dem vorliegenden Verfahren hat man nur drei unbekannte Dämpfkraftvektoren zu bestimmen, da der vierte Dämpfkraftvektor des unverstellbaren Schwingungsdämpfers über die Dämpfkraftkennlinie bereits bekannt ist. Folglich reduziert sich der Berechnungsaufwand. Die zur Fig. 4 beschriebene Rechnerstruktur kann für die Bestimmung der Dämpfkräfte der verstellbaren Schwingungsdämpfer 7_{VL}; 9_{HL}; 9_{HR} selbstverständlich auch nach einem anderen Ablaufplan bzw. Modulen erfolgen.

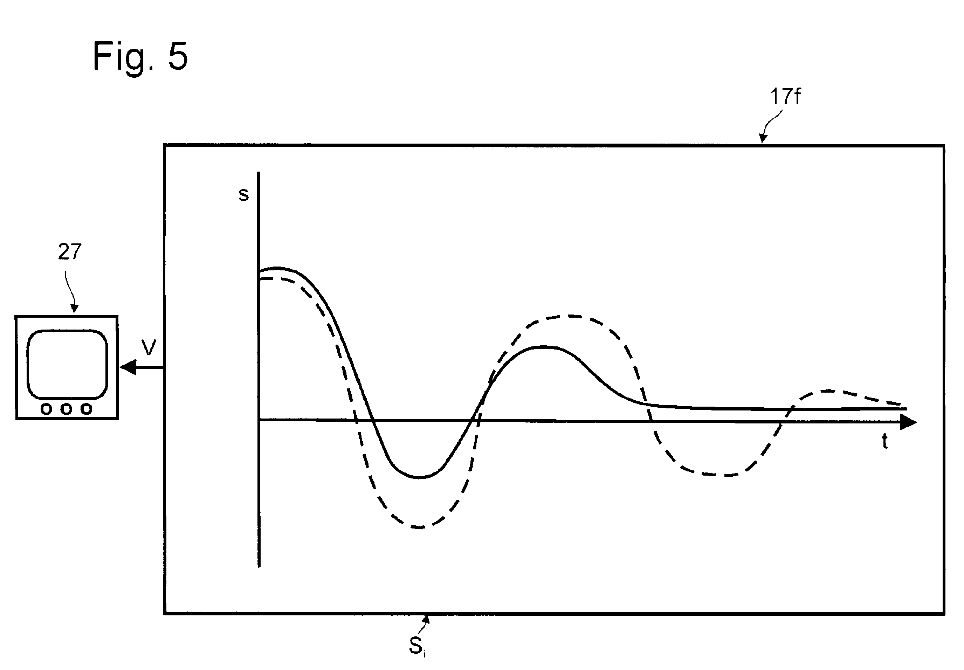

Mit der Fig. 5 wird eine weitere Funktion des Verfahrens zum Betrieb der verstellbaren Schwingungsdämpfer beschrieben. In dem Modul 17a wird von einer Dämpfkraftkennlinie F_{D} ausgegangen, die einem Schwingungsdämpfer mit minimal zulässiger Dämpffunktion entspricht. Aus den Signalen Sᵢ lässt sich in einem Modul 17f der Rechnereinheit 17 eine Abklingfunktion einer z. B. eine Fahrzeugaufbaubewegung bestimmen, wie in Vollinie dargestellt ist. Wird diese Abklingfunktion von der Dämpfkrafteinstellung der verstellbaren Schwingungsdämpfer nicht mehr erreicht, wie gestrichelt eingezeichnet, dann ist davon auszugehen, dass einer der Schwingungsdämpfer des Fahrzeugs defekt ist, da der Dämpfkraftbeitrag vom unverstellbaren Schwingungsdämpfer nicht erbracht wurde. Bei einem verstellbaren Schwingungsdämpfer kann man Verschleißerscheinungen v mit der Verstellfunktion in Grenzen kompensieren, bei einem unverstellbaren steht dieser Effekt nicht zur Verfügung. Folglich ist davon auszugehen, dass bei einer Abklingfunktion, die bei gleicher Anregung länger andauert, Vergleich gestrichelte Linie zur Volllinie, ein verschlissener Schwingungsdämpfer vorliegt. Wenn der unverstellbare Schwingungsdämpfer nicht mehr die Mindestdämpfkraft erzeugen kann, dann werden auch die verstellbaren Schwingungsdämpfer mit hoher Wahrscheinlichkeit nicht mehr ausreichend funktionstüchtig sein, da als Verschleißteile in einem Schwingungsdämpfer die Kolbenstangendichtung und eine Kolbendichtung auftreten, die wiederum unabhängig von der Verstellbarkeit eines Schwingungsdämpfers zumindest vergleichbar sind.

Der Verschleißzustand v der Schwingungsdämpfer kann einer Anzeige 27 zugeführt werden, so dass der Fahrer informiert ist und für einen Austausch sorgen kann.

## Patentansprüche

1. Fahrwerk für ein Kraftfahrzeug mit mindestens einer Vorderachse und mindestens einer Hinterachse, wobei an jeder Achse mindestens zwei Schwingungsdämpfer angeordnet sind, die durch eine Fahrzeuglängsachse voneinander getrennt sind, wobei die Summe der auftretenden Dämpfkräfte der Schwingungsdämpfer verstellbar ist,
**dadurch gekennzeichnet,**
**dass** an mindestens einer Fahrzeugachse (3; 5) ein Schwingungsdämpfer (7v_{L}; 9_{HR}; 9_{HL}) mit verstellbarer Dämpfkraft und ein unverstellbarer Schwingungsdämpfer (7_{VR}) angeordnet sind.

2. Fahrwerk nach Anspruch 1,
**dadurch gekennzeichnet,**
**dass** bei dem Fahrwerk bezogen auf die Fahrzeuglängsachse (19) diagonal gegenüberliegende Schwingungsdämpfer jeweils als verstellbare (7_{VL}; 9_{HR}) und unverstellbare Schwingungsdämpfer (7_{VR}; 9_{HL}) ausgeführt sind.

3. Verfahren zum Betrieb eines Fahrwerks nach Anspruch 1,
**dadurch gekennzeichnet,**
**dass** eine Sensorik (13) mindestens einen Fahrzustandsparameter (Si) erfasst und diesen einer Rechnereinheit (17) zuführt, in der auf Basis des mindestens einen Fahrzeugstandparameters (Si) bezogen auf mindestens einen Fahrzustand Dämpfkräfte ermittelt werden um einen angestrebten Fahrzustand zu erreichen, wobei in die Dämpfkraftbestimmung die Dämpfkräfte des mindestens einen unverstellbaren Schwingungsdämpfers (7_{VR}; 9_{HL}) als Dämpfkraftanteile eingehen und die Einstellung der verstellbaren Schwingungsdämpfer (7_{VL}; 9_{HR}; 9_{HL}) unter Berücksichtigung der Dämpfkraftanteile des mindestens einen unverstellbaren Schwingungsdämpfers (7v_{R}; 9_{HL}) vorgenommen wird.

4. Verfahren nach Anspruch 3,
**dadurch gekennzeichnet,**
**dass** auf Basis des mindestens einen Fahrzeugzustandsparameters (Si) die Dämpfkraft des mindestens einen unverstellbaren Schwingungsdämpfers (7_{VR}; 9_{HL}) anhand seiner Dämpfkraftkennlinie (25) ermittelt wird.

5. Verfahren nach Anspruch 4,
**dadurch gekennzeichnet,**
**dass** bei dem unverstellbaren Schwingungsdämpfers (7_{VR}; 9_{HL}) von einer Dämpfkraftkennlinie (25) ausgegangen wird, die der Mindestdämpfkraftfunktion entspricht, wobei aus den Fahrzustandsparameter (Si) ein Abklingverhalten einer Fahrzeugschwingbewegung bestimmbar ist, und das aus einer Abweichung von einem Sollabklingverhalten der Verschleißzustand (V) zumindest des unverstellbaren Schwingungsdämpfers (7_{VR}; 9_{HL}) bestimmt wird.

6. Verfahren nach Anspruch 4,
**dadurch gekennzeichnet,**
**dass** der Verschleißzustand (V) über eine Anzeigevorrichtung (27) dargestellt wird.

## Claims

1. Suspension system for a motor vehicle having at least one front axle and at least one rear axle, wherein at least two vibration dampers are arranged on each axle and are separated from one another by a vehicle longitudinal axis, wherein the sum of the damping forces of the vibration dampers which occur can be adjusted,
**characterized**
**in that** a vibration damper (7_{VL}; 9_{HR}; 9_{HL}) with an adjustable damping force and a non-adjustable vibration damper (7_{VR}) are arranged on at least one vehicle axle (3; 5).

2. Suspension system according to Claim 1,
**characterized**
**in that**, in the suspension system, vibration dampers which lie diagonally opposite one another with respect to the vehicle longitudinal axis (19) are each embodied as adjustable vibration dampers (7_{VL}; 9_{HR}) and non-adjustable vibration dampers (7_{VR}; 9_{HL}).

3. Method for operating a suspension system according to Claim 1,
**characterized**
**in that** a sensor system (13) senses at least one driving state parameter (Sᵢ) and feeds the latter to a computer unit (17) in which, on the basis of the at least one driving state parameter (Sᵢ), damping forces are determined with respect to at least one driving state in order to achieve an aimed-at driving state, wherein the damping forces of the at least one non-adjustable vibration damper (7_{VR}; 9_{HL}) are included as damping force components in the determination of the damping force, and the setting of the adjustable vibration dampers (7_{VL}; 9_{HR}; 9_{HL}) is performed taking into account the damping force components of the at least one non-adjustable vibration damper (7_{VR}; 9_{HL}) .

4. Method according to Claim 3,
**characterized**
**in that** the damping force of the at least one non-adjustable vibration damper (7_{VR}; 9_{HL}) is determined by means of the latter's damping force characteristic curve (25), on the basis of the at least one driving state parameter (Sᵢ).

5. Method according to Claim 4,
**characterized**
**in that**, in the case of the non-adjustable vibration damper (7_{VR}; 9_{HL}), a damping force characteristic curve (25) is assumed which corresponds to the minimum damping force function, wherein a decaying behaviour of a vehicle oscillatory motion can be determined from the driving state parameter (Sᵢ), and in that the state of wear (V) at least of the non-adjustable vibration damper (7_{VR}; 9_{HL}) is determined from a deviation from a setpoint decaying behaviour.

6. Method according to Claim 4,
**characterized**
**in that** the state of wear (V) is represented by means of a display device (27).

## Revendications

1. Train de roulement pour véhicule automobile, présentant au moins un essieu avant et au moins un essieu arrière, au moins deux amortisseurs étant disposés sur chaque essieu et étant séparés l'un de l'autre par l'axe longitudinal du véhicule, la somme des forces d'amortissement exercées par les amortisseurs pouvant être ajustée,
**caractérisé en ce que**
un amortisseur (7_{VL}; 9_{HR}; 9_{HL}) dont la force d'amortissement est ajustable et un amortisseur (7_{VR}) non ajustable sont disposés sur au moins un essieu (3; 5) du véhicule.

2. Train de roulement selon la revendication 1, **caractérisé en ce que** dans le train de roulement, les amortisseurs diagonalement opposés par rapport à l'axe longitudinal (19) du véhicule sont réalisés respectivement comme amortisseurs ajustables (7_{VL}; 9_{HR}) et amortisseurs non ajustables (7_{VR}; 9_{HL}) .

3. Procédé d'utilisation d'un train de roulement selon la revendication 1, **caractérisé en ce qu'**un ensemble (13) de capteurs saisit au moins un paramètre d'état de roulage (Si) et l'amène à une unité de calcul (17) dans laquelle les forces d'amortissement sont déterminées sur base du ou des paramètres d'état (Si) du véhicule en rapport à au moins un état de roulage pour atteindre un état de roulage souhaité, **en ce que** les forces d'amortissement du ou des amortisseurs non ajustables (7_{VR}; 9_{HL}) interviennent dans la détermination de la force d'amortissement comme parties de la force d'amortissement et **en ce que** le réglage des amortisseurs ajustables (7_{VL}; 9_{HR}; 9_{HL}) est réalisé en tenant compte des parties de la force d'amortissement du ou des amortisseurs (7_{VR}; 9_{HL}) non ajustables.

4. Procédé selon la revendication 3, **caractérisé en ce que** la force d'amortissement du ou des amortisseurs non ajustables (7_{VR}; 9_{HL}) est déterminée sur la base du ou des paramètres d'état (Sᵢ) du véhicule à l'aide de leurs lignes caractéristiques (25) de force d'amortissement.

5. Procédé selon la revendication 4, **caractérisé en ce que** pour l'amortisseur non ajustable (7_{VR}; 9_{HL}), on part d'une ligne caractéristique (25) de force d'amortissement qui correspond à la fonction de force d'amortissement minimale, le comportement d'atténuation d'un déplacement d'oscillation du véhicule pouvant être déterminé à partir du paramètre (Si) d'état de roulage, et **en ce que** l'état d'usure (V) d'au moins l'amortisseur non ajustable (7_{VR}; 9_{HL}) est déterminé à partir d'un écart par rapport à un comportement d'atténuation de consigne.

6. Procédé selon la revendication 4, **caractérisé en ce que** l'état d'usure (V) est présenté sur un dispositif d'affichage (27).
